(19) Europäisches Patentamt
European Patent Office
Office européen des brevets

(11) **EP 2 804 513 B1**

(12) **FASCICULE DE BREVET EUROPEEN**

(45) Date de publication et mention
de la délivrance du brevet:
**28.06.2017 Bulletin 2017/26**

(21) Numéro de dépôt: **13701851.1**

(22) Date de dépôt: **09.01.2013**

(51) Int Cl.:
**A47J 37/06** *(2006.01)* **A47J 27/62** *(2006.01)*

(86) Numéro de dépôt international:
**PCT/FR2013/050045**

(87) Numéro de publication internationale:
**WO 2013/107964 (25.07.2013 Gazette 2013/30)**

(54) **PROCEDE DE CUISSON D'ALIMENTS ET APPAREIL METTANT EN OEUVRE CE PROCEDE**

VERFAHREN ZUM GAREN VON LEBENSMITTELN UND VORRICHTUNG ZUR DURCHFÜHRUNG DIESES VERFAHRENS

METHOD FOR COOKING FOODS, AND APPARATUS IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2012 FR 1250414**

(43) Date de publication de la demande:
**26.11.2014 Bulletin 2014/48**

(73) Titulaire: **SEB S.A.**
**69130 Ecully (FR)**

(72) Inventeur: **VOLATIER, Sébastien**
**21000 Dijon (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**WO-A1-95/28116    WO-A2-2007/127072**
**GB-A- 2 179 763    US-A1- 2008 083 730**

**Description**

La présente invention concerne un appareil permettant de cuire des aliments par contact avec au moins une plaque de chauffe, et un procédé associé.

Parmi ces appareils, on connaît notamment les grils double faces qui comprennent des plaques de chauffes inférieure et supérieure entre lesquelles sont positionnés un ou plusieurs aliments à cuire. Les aliments sont disposés horizontalement sur la plaque de chauffe inférieure. Les aliments peuvent être de la viande, du poisson, des légumes ou autre.

DE 4302190 et WO 2007/149063 divulguent un procédé et un dispositif de cuisson illustratifs de l'art antérieur.

Le document WO2007/127072 décrit un appareil de cuisson d'aliments comprenant des plaques de chauffe inférieure et supérieure cuisant par contact l'aliment et étant chauffée par des éléments de chauffe (gaz ou électrique). Des sondes de température sont prévues sur chaque plaque de chauffe pour déterminer leur température.

Cependant, ces solutions connues ne permettent pas d'obtenir un résultat organoleptique optimisé. Elles ne permettent pas de fournir une cuisson automatique réellement favorable à l'aliment et au goût de l'utilisateur.

Ainsi, l'invention vise à fournir un procédé de mise en oeuvre d'un appareil de cuisson d'un aliment par contact avec au moins une plaque de chauffe, et l'appareil associé, permettant de contrôler la cuisson des aliments de manière automatique, selon un processus de cuisson optimisé pour obtenir :

- un résultat organoleptique favorable,
- une juste température de cuisson à coeur,
- une texture et couleur au goût de chacun.

Pour tendre vers la satisfaction d'une partie au moins de ces objectifs, une première et une deuxième approches alternatives mais procédant d'un même concept sont proposées respectivement à la revendication 1 et à la revendication 2 du présent document.

Pour éviter que la cuisson soit plus importante si l'utilisateur oublie ou n'a pas prêté attention à l'état d'avancement probable de la cuisson, on préfère qu'à l'issue du temps de cuisson (T) calculé, il y ait favorablement une indication par l'appareil de l'atteinte de la cuisson souhaitée.

Eventuellement, cette indication pourrait être remplacée ou complétée (et alors ceci sera valable pour ce qui suit) par un arrêt automatique immédiat de l'appareil ou un réglage de celui-ci pour un simple maintien au chaud de l'aliment cuit. Mais alors l'inertie thermique pourrait altérer la qualité de la cuisson si l'utilisateur ne retire pas rapidement l'aliment hors de l'appareil.

Pour favoriser l'atteinte jugée la plus sûre de la cuisson attendue, on conseille par ailleurs de réaliser :

- une mesure de l'épaisseur (Y) de l'aliment alors disposé contre ladite plaque de chauffe et/ou une estimation de la surface (Z) occupée par cet aliment sur la plaque de chauffe,
- et le calcul du temps de cuisson (T) de l'aliment ainsi disposé, en fonction :

  * outre de la température (X) de cuisson sélectionnée,
  * de l'épaisseur (Y) de l'aliment, et/ou de la surface (Z) occupée par l'aliment.

Que ce soit selon la première ou seconde approche, la mise en mémoire pourra être un pré-enregistrement mémorisé en usine, avant la première utilisation opérationnelle de l'appareil.

Ainsi, on limitera les risques d'erreurs et l'intervention de l'utilisateur.

Selon la seconde approche, à nouveau pour favoriser l'atteinte jugée la plus sûre de la cuisson attendue, on conseille même de réaliser, comme déjà évoqué :

- une mesure de l'épaisseur (Y) de l'aliment alors disposé contre ladite plaque de chauffe et/ou une estimation de la surface (Z) occupée par cet aliment sur la plaque de chauffe,
- le calcul du temps de cuisson (T) de l'aliment ainsi disposé, en fonction :

  * outre de ladite température (X) de cuisson interne parmi celles mises en mémoire,
  * de l'épaisseur (Y) de l'aliment et/ou de la surface (Z) occupée par l'aliment.

Pour favoriser une prise en compte du paramètre d'épaisseur et/ou éviter par exemple d'avoir à retourner l'aliment en cours de cuisson, ce qui sera nécessaire avec un appareil telle une poêle ne comprenant qu'une plaque de chauffe, en l'espèce la calotte de cette poêle que l'on place sur la source de chaleur (plaque électrique, à induction ou autre, ou encore brûleur à gaz), on prévoit que, lors dudit fonctionnement de l'appareil, on dispose l'aliment entre plusieurs dites plaques de chauffe, à leurs contacts. Un gril à résistances électriques de chauffage est alors particulièrement visé.

Bien qu'en toute hypothèse on puisse donc atteindre une partie au moins de l'objectif de cuisson automatique avec ce calcul de temps de cuisson (T) de l'aliment au contact de la ou des plaque(s) de chauffe, en fonction éventuellement seulement de la/des dites température(s) (X) mise(s) en mémoire, on recommande toutefois que ce calcul du temps de cuisson (T) de l'aliment soit fonction de ladite surface (Z) occupée par l'aliment, laquelle sera alors obtenue par des mesures de températures de plaque(s) de chauffe.

Pour limiter favorablement les possibles dérives de calcul et gérer de façon fiable, en un minimum de temps et de façon aussi simple que possible l'estimation de ladite surface (Z), on recommande de mesurer, par au moins un capteur de température et consécutivement à la mise en contact de l'aliment avec la ou les plaque(s) de chauffe, la température de la ou de l'une des plaque(s) de chauffe, et de comparer la variation de la température mesurée qui en découle à au moins un seuil de référence.

Par souci également de fiabilité éprouvée, on conseille par ailleurs que le temps de cuisson (T) de l'aliment soit obtenu par une méthode de calcul par corrélation quadratique ou linéaire.

Pour automatiser en outre de façon optimisée le fonctionnement de l'appareil, en évitant des départs intempestifs non justifiés par la présence d'un aliment et la volonté de l'utilisateur, on recommande que le procédé de mise en oeuvre ici concerné comprenne, avant la mise en contact de l'aliment avec la ou les plaque(s), une étape (A) de préchauffage de l'appareil suivie de l'étape de cuisson (B) de l'aliment dont le début est détecté par un abaissement comparé à un seuil prédéterminé de la température de la ou de l'une des plaque(s) de chauffe.

A nouveau pour fiabiliser et affiner le processus de mise en oeuvre, en vue d'une qualité de cuisson optimisée, on conseille :

- que le calcul du temps de cuisson (T) de l'aliment soit fonction de ladite surface (Z) occupée par l'aliment et, pour estimer cette surface,
- d'utiliser un seul capteur de température qui, consécutivement à la mise en contact de l'aliment avec la ou les plaque(s), mesurera la température de l'une au moins desdites plaques, à l'écart de la zone de contact de l'aliment,
- et de comparer à au moins un seuil les variations de températures mesurées qui en découlent ou un temps alors calculé jusqu'à une stabilisation de la température mesurée, après ladite mise en contact.

Pour ladite comparaison, on recommande d'utiliser le fait constaté qu'une relation existe entre la surface occupée par l'aliment et :

- le temps observé après introduction de aliment jusqu'à la stabilisation également constatée de la chute de température consécutive au contact plaque(s) chaude(s)/aliment ; à savoir le passage à pente (sensiblement) nulle de la température de plaque mesurée,
- ou cette chute mesurée de température de plaque (en amplitude ou en minimum atteint), consécutivement à ladite mise en place de l'aliment,
- ou une vitesse de chute de cette température.

En alternative, il a été imaginé que, le calcul du temps de cuisson (T) de l'aliment étant alors fonction de ladite surface (Z) occupée par l'aliment :

- on utilise, pour estimer cette surface, plusieurs capteurs de température (qui, consécutivement à la mise en contact de l'aliment avec la ou les plaques, mesureront la température de l'une au moins desdites plaques, dans la zone de contact de l'aliment,
- et on compare à au moins un seuil les variations de températures mesurées qui en découlent ou un temps alors calculé jusqu'à une stabilisation de la température mesurée, après ladite mise en contact.

Une qualité organoleptique élevé de l'aliment pourra être atteinte si, comme proposé par ailleurs, pendant la ou les étapes d'estimation de la surface (Z) occupée par l'aliment et/ou de l'épaisseur (Y) de l'aliment, et/ou du calcul du temps de cuisson (T) de l'aliment, il y a marquage de l'aliment, avec une puissance électrique délivrée par l'appareil qui est maximum.

On favorisera en effet ainsi un marquage :

- rapide en début de cuisson pour une meilleure rétention de l'eau à l'intérieur de la viande, et donc un meilleur caractère juteux,
- suffisamment net, tout en pouvant prévenir une carbonisation néfaste, pour apporter du goût et de la croustillance sans générer de composés carcinogènes.

Pour affiner d'une autre manière la conduite de la mise en oeuvre du procédé à fin de qualité, il est en outre conseillé que puisse être prévu l'une au moins des étapes suivantes :

- sélection de la catégorie de l'aliment à cuire, et/ou
- sélection de l'état de congélation de l'aliment, et/ou
- sélection d'un marquage de gril souhaité de l'aliment.

A ce sujet, on recommande par ailleurs que la température de cuisson (θ) de l'aliment après et la température (θ') de préchauffage soient fonction de ladite sélection opérée.

Pour optimiser encore d'une autre manière la conduite de la mise en oeuvre du procédé, il est proposé qu'après avoir disposé l'aliment au contact de la ou des plaque(s), on puisse :

- mesurer l'épaisseur (Y) de l'aliment et,
- en fonction de cette mesure, déclencher ou non la cuisson de l'aliment par le calcul du temps de cuisson.

On recommande, par souci de précision et de simplicité et fiabilité de mise en oeuvre, que l'épaisseur (Y) de l'aliment soit déterminée par une mesure de la distance séparant les plaques de chauffe entre lesquelles est disposé l'aliment.

Prévoir une prise en compte des paramètres X,Y et Z permet d'optimiser la qualité du produit cuit. Le temps de cuisson (T) sera d'autant plus long que la surface de la plaque de chauffe sera occupée et l'épaisseur (Y) de l'aliment plus élevée. La durée de cuisson (T) dépendra ainsi du volume de l'aliment mis en place.

Outre le procédé précité avec tout ou partie des caractéristiques présentées, un objet de l'invention concerne un appareil de cuisson comprenant :

- au moins une plaque de chauffe pour chauffer par contact l'aliment et, pour atteindre donc une cuisson interne plus ou moins importante de l'aliment souhaitée par un utilisateur :
- une mémoire pour stocker différentes températures (X) de cuisson internes de l'aliment,
- des moyens de mesure de l'épaisseur (Y) de l'aliment alors disposé au contact de la ou des plaques de chauffe et/ou des moyens d'estimation de la surface (Z) occupée par cet aliment sur la ou l'une des plaque(s) de chauffe,

- des moyens de calcul d'au moins un temps de cuisson (T) de l'aliment ainsi disposé, en fonction :

    * de l'une au moins des températures (X) de cuisson internes parmi celles mises en mémoire, et
    * de l'épaisseur (Y) de l'aliment, et/ou de la surface (Z) occupée par l'aliment ;

- et des moyens d'indication à l'utilisateur, par l'appareil, de l'atteinte de la cuisson correspondante.

Par souci de précision et de simplicité et fiabilité de mise en oeuvre, on recommande que les moyens d'estimation de la surface (Z) occupée par l'aliment sur la plaque de chauffe comprennent au moins un capteur de température mesurant la température de la ou de l'une au moins des plaque(s) de chauffe.

Notamment dans l'hypothèse d'une option mono-capteur, avec contrôle optimisée de la cuisson, on conseille par ailleurs que le capteur de température soit situé dans une zone non susceptible d'être en contact avec l'aliment.

Encore dans un cadre d'optimisation de l'appareil et donc de la conduite de la mise en oeuvre de son mode opératoire, il est proposé que les moyens de calcul du temps de cuisson (T) de l'aliment comprennent un microcontrôleur configuré pour déterminer la pente de la courbe de température obtenue à partir des mesures du ou des capteur(s) de température.

D'autres caractéristiques et avantages de l'invention ressortiront clairement de la description qui en est faite ci-après, dans le cas d'une utilisation commune des trois paramètres précités (X,Y,Z), et ce à titre indicatif et nullement limitatif, en référence aux dessins annexés, dans lesquels :

- la figure 1 représente un exemple de processus de cuisson selon un mode de réalisation de l'invention ;
- la figure 2 représente une enveloppe inférieure d'un appareil de cuisson munie de deux capteurs de température, selon un mode de réalisation de l'invention ;
- la figure 3 représente les deux courbes de températures mesurées par deux capteurs de température de l'une des enveloppes, telle l'enveloppe inférieure, et la courbe de température mesurée au coeur de l'aliment en fonction du temps,
- la figure 4 montre un exemple de cinétique de cuisson assurant une cuisson avec marquage, indépendamment du nombre d'aliments sur la plaque, avec mesure de températures par un seul capteur,

- les figures 5, 6 montrent respectivement l'évolution de la température du capteur de température prévu, en fonction du temps et de la surface occupée par l'aliment, et l'évolution de la pente de la courbe 2 en fonction du temps et de la surface occupée,
- les figures 7, 8 montrent un appareil de cuisson de type gril permettant de mettre en oeuvre le procédé objet de l'invention.

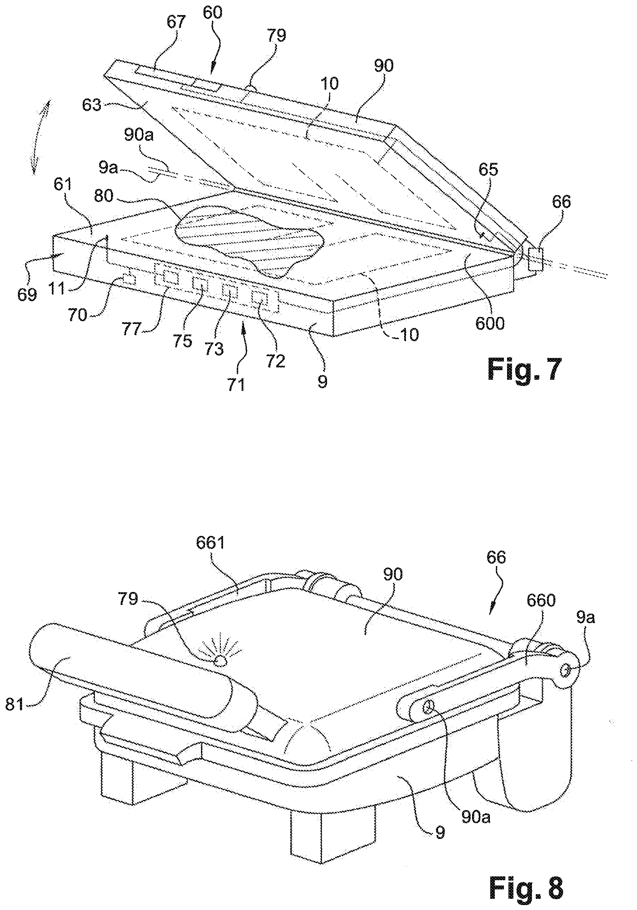

Ce qui est décrit ci-dessous est destiné à être mis en oeuvre dans un appareil de cuisson. Un tel appareil comprend ici deux enveloppes articulées l'une par rapport à l'autre dont une enveloppe inférieure 9 et une enveloppe supérieure 90 ; voir figures 7, 8. L'enveloppe inférieure 9 comprend une plaque de chauffe inférieure 61 et l'enveloppe supérieure comprend une plaque de chauffe supérieure 63. Chaque enveloppe comprend une résistance chauffante 10 disposée entre la plaque de chauffe et le fond de l'enveloppe.

En position normale de fonctionnement de l'appareil, l'aliment ou les aliments à cuire sont disposés horizontalement sur la plaque de chauffe inférieure qui s'étend selon un plan horizontal. L'aliment peut être de la viande, ou autre.

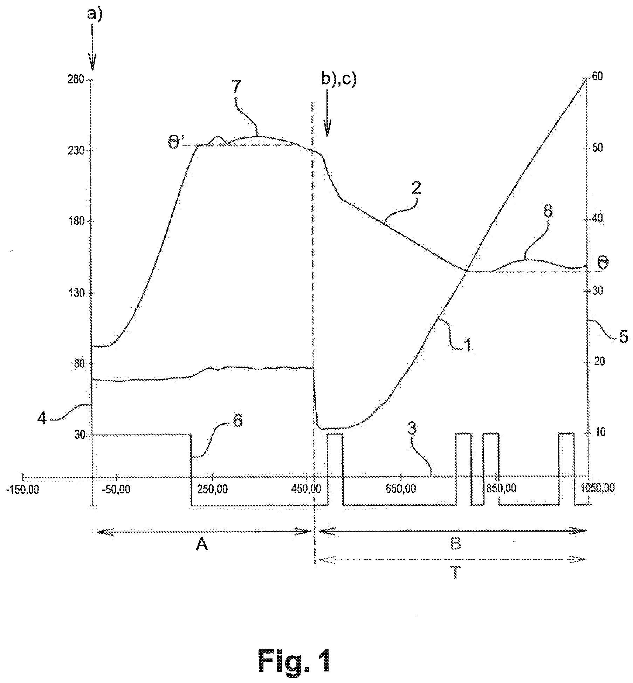

Comme illustré sur la figure 1, le procédé de cuisson comprend un préchauffage A) de l'appareil suivi d'une cuisson B) de l'aliment pendant un temps (T).

La figure 1 représente comme exemple un processus de cuisson d'une viande non congelée. La courbe 1 représente l'évolution de la température mesurée au coeur de l'aliment en fonction du temps. Elle a été acquise en usine et n'existe pas nécessairement dans l'appareil commercialisé. Certains au moins de ces points sont toutefois entrés en mémoire 72 de l'appareil. La courbe 2 représente l'évolution en fonction du temps de la température de l'une des plaques de chauffe, laquelle est mesurée lors du fonctionnement commercial de l'appareil. L'axe des abscisses 3 représente le temps en seconde, l'axe des ordonnées de gauche 4 représente la température mesurée de la plaque de chauffe concernée, telle 63, et l'axe des ordonnées de droite 5 représente la température mesurée au coeur de l'aliment. La courbe 6 représente le cycle de chauffe en fonction du temps (puissance consommée). Lors de l'étape A), la température de la plaque mesurée monte rapidement jusqu'à un palier 7 correspondant à une température de préchauffage. Dans l'exemple 2, cette température est d'environ 230°C. Une fois ceci atteint, l'aliment est posé sur la plaque de chauffe inférieure. La température élevée de contact permet d'effectuer un marquage sur l'aliment. Une croute est alors formée.

L'enfournement de l'aliment dans l'appareil de chauffe correspond au début de l'étape de cuisson de l'aliment B). La température de la plaque de chauffe mesurée (courbe 2) baisse jusqu'à un palier de stabilisation en température 8, correspondant à environ 150°C dans l'exemple.

A titre de confirmation (puisqu'a priori non disponible dans l'appareil), la courbe 1 montre que la température de l'aliment monte entretemps progressivement jusqu'à une température qui est fonction de la catégorie de l'aliment, voire de son état de congélation.

Ci-dessous, on présente un premier synoptique de cuisson contrôlé :

Avant que ce synoptique soit mis en oeuvre, avec par exemple l'appareil schématisé figure 7, on a compris qu'en en usine (donc avant commercialisation de l'appareil), ont été mises en mémoire 72 de l'appareil notamment différentes températures (X) de cuisson internes de l'aliment (de préférence de plusieurs aliments) permettant par exemple, pour au moins un aliment donné, des cuissons à coeur successivement saignante, rosé et bien cuite.

Ceci fait et appareil vendu, lorsque son utilisateur va l'utiliser, les étapes suivantes vont être mises en oeuvre :

- mise sous tension de l'appareil 1, par exemple par appui sur un bouton M/A 70 ;
- via l'interface 67 de l'appareil, et dans le menu que celle-ci affiche alors, sélection sur l'appareil, par l'utilisateur, de préférence d'abord d'une catégorie d'aliment à cuire (choix par exemple entre viande et poisson), puis ici d'un degré (X) de cuisson interne souhaité de l'aliment, parmi plusieurs disponibles (si prévu) ;
- détermination :

  - des températures θ : température maximum de préchauffage (avant mise en place de l'aliment) compte tenu de la catégorie d'aliment, si celle-ci est sélectionnable, et θ' : température minimum ou finale de cuisson de l'aliment (après sa mise en place de l'aliment), à nouveau compte tenu de sa catégorie, si prévu,
  - et du rapport cyclique : évolutions de l'énergie électrique fournie aux résistances 10 à partir de la source prévue (telle le secteur) ; définition et application des variations, qui peuvent être binaires - maximum ou nulle -, de cette énergie ; voir courbe 6 ;

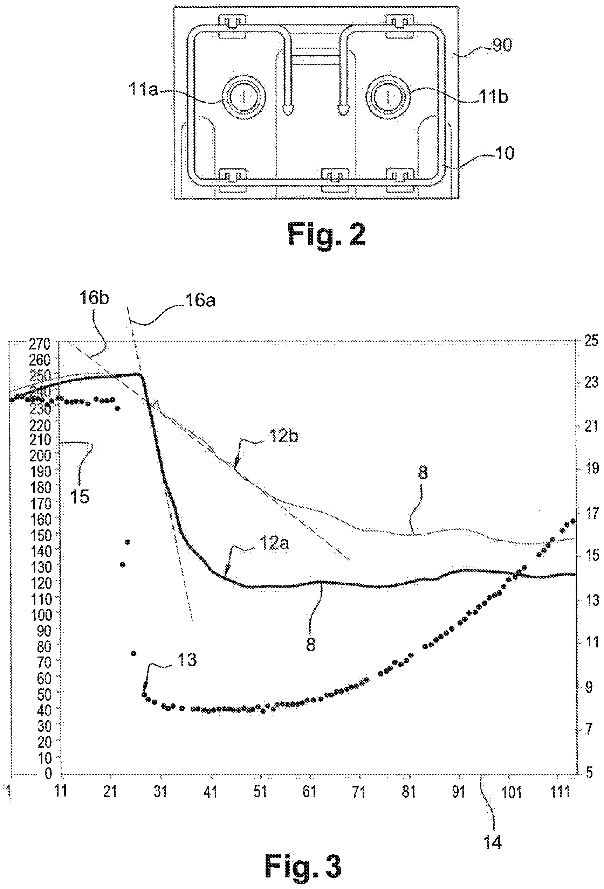

- préchauffe de l'appareil de cuisson (étape A), via les résistances 10, avec application d'un temps prédéterminé de préchauffe défini lors des tests usine, entré alors en mémoire 72 et qui permet d'atteindre la température stabilisée θ pendant l'intervalle prévu;
- appareil de cuisson ouvert, mise en place de l'aliment ;
- fermeture de l'appareil de cuisson ; ceci sera de préférence nécessaire pour activer le début de la cuisson de l'aliment (étape B), avec alors de préférence automatiquement une mesure de l'épaisseur (Y) de l'aliment introduit entre les plaques 61, 63 ;
- l'appareil détecte alors automatiquement un abaissement brutal de la température mesurée de la plaque de chauffe concernée (contact avec l'aliment), après quoi la température se stabilise sensiblement ; voir zone 8 figures 1 ou 3. De préférence, ce début d'étape de cuisson B) sera détecté :

- en fonction de cet abaissement de température(s) mesurée (s) (en temps, vitesse, pente...),
- et par comparaison avec un ou plusieurs seuils prédéterminés de la chute détectée ;

- à partir de cette/ces variation(s) de température(s) mesurée(s) sur la plaque concernée du gril, il peut alors y avoir estimation de la charge (ou surface occupée par l'aliment) : paramètre (Z) précité ;
- toujours de préférence au début de cette étape de cuisson, il y a par ailleurs estimation/calcul par l'appareil du temps de cuisson (T) requis. Ce temps est donc celui, indiqué par exemple figure 1 (T), compris entre le moment où l'aliment est mis en contact avec la/les plaques de chauffe et celui où il en est retiré, en fin de cuisson. Le moment d'origine peut typiquement être celui de la fermeture de l'appareil, s'il s'agit d'un gril, suivi quasi immédiatement par la chute de température détectée de la plaque mesurée. Le moment de fin est aussi celui où l'annonce de la cuisson atteinte est faite par l'appareil. La température/le degré (X) de cuisson interne attendu(e) est atteint(e) ;
- via par exemple un microcontrôleur 73,75, et un indicateur 79 accessible à l'utilisateur, on peut ensuite prévoir que l'utilisateur soit, à la fin du temps calculé, informé par l'appareil de l'atteinte du degré (X) de cuisson attendu ; l'utilisateur est ainsi invité à retirer son aliment ;
- l'appareil peut alors par exemple maintenir automatiquement au chaud l'aliment en attendant que l'utilisateur ouvre l'appareil ;
- l'appareil peut enfin être mis hors tension, par exemple via l'interrupteur 70.

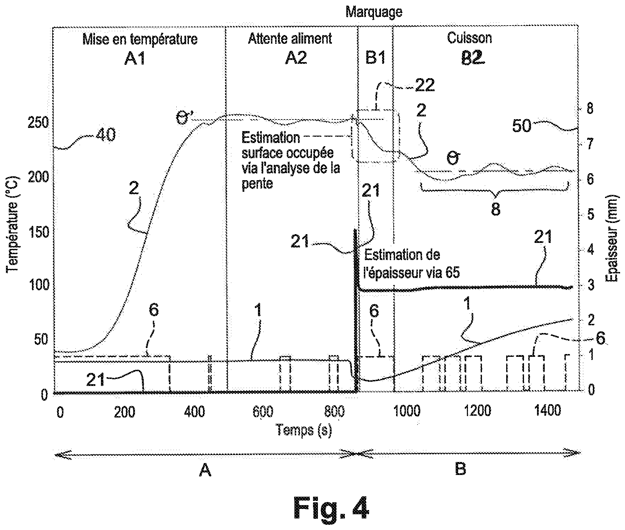

Ainsi, la fin de cuisson s'établit à l'issue du temps T estimé/calculé, lorsqu'une fois l'aliment placé dans l'appareil préchauffé, la température mesurée, après avoir chuté du fait de cet aliment, se stabilise (zone 8 figure 1 ou 4), par exemple entre deux valeurs dont l'écart a été prédéfini et entré en mémoire 72.

Outre ce qui précède, l'interface 67 avec l'utilisateur pourra permettre de sélectionner dans le menu l'état de congélation de l'aliment (congelé ou non) et/ou l'importance du marquage de gril souhaité (fortement marqué ou autre).

L'interface 67 peut être un écran tactile.

Dans le synoptique ci-dessus, le temps de cuisson (T) de l'aliment lors de l'étape B) précitée est déterminé selon un processus où on a conduit les étapes ci-après présentées :

- une étape de mesure de l'épaisseur (Y) de l'aliment,
- une étape d'estimation par l'appareil de la surface (Z) occupée par l'aliment sur l'une des plaques de chauffe,
- une étape de calcul dans l'appareil d'un temps de cuisson (T) de l'aliment en fonction :

        * du degré (X) de cuisson interne de l'aliment,
        * de l'épaisseur (Y) de l'aliment,
        * de la surface (Z) occupée par l'aliment.

Les degrés (X) sélectionnables pourront correspondre à des cuissons respectivement saignante, à point et bien cuite. A chaque cas correspondra, en mémoire 72, une température de cuisson tirée de la courbe 1, en usine. Ainsi, on pourra avoir trois valeurs du paramètre, respectivement 55°C, 65°C et 75°C.

Pour mesurer l'épaisseur (Y) de l'aliment, on peut prévoir sur l'appareil des moyens capteur 65 détectant la distance moyenne entre les plaques de chauffe inférieure et supérieure, 61,63 et en particulier leur écartement relatif lorsque l'aliment est introduit entre elles. On peut alors obtenir une épaisseur d'aliment qui est fonction de la distance de déplacement relatif des plaques entre elles, lors de la fermeture de l'appareil.

Figure 7, on constate que ces plaques de chauffe sont mobiles en rotation l'une par rapport à l'autre. Lorsque la plaque de chauffe supérieure est en position horizontale après s'être déplacée vers la plaque de chauffe inférieure, un mécanisme 66 de positionnement peut déplacer linéairement et verticalement la plaque de chauffe supérieure (en rapprochant ou écartant l'une de l'autre ces plaques) jusqu'au contact avec l'aliment interposé.

A titre d'exemple, les moyens capteur 65 peuvent comprendre au moins un capteur optoélectronique ou un capteur de proximité inductif. Il pourrait en alternative s'agir d'un capteur d'effort mesurant par exemple l'effort sur une lame de ressort via une jauge de contrainte, ou d'un capteur de position incrémentale magnétique utilisant l'effet Hall (à nouveau mesure de distance).

Une fois le préchauffage terminé, le déclenchement automatique, par l'appareil, de l'étape de cuisson ne se produira de préférence que si les moyens capteur 65 mesurent une valeur ni nulle ni « infinie ».

Figure 8, on voit que les moyens ou le mécanisme 66 de positionnement comprennent des bras 660,661 montés articulés entre les enveloppes inférieure 9 et supérieure 90. Ces bras, ici deux, 660,661, sont fixés, ici latéralement, près de l'un des bords de chacune des enveloppes, de sorte que deux axes de rotation parallèles 9a,90a (horizontaux) passant par les fixations des bras 660,661 sont définis, pour les mouvements relatifs entre les plaques de chauffe. A l'opposé, une poignée 81 fixée à l'une des enveloppes, ici 90, aide à la manoeuvre.

Durant l'étape d'estimation de la surface (Z) précitée, des moyens d'estimation de cette surface déterminent si la plaque de chauffe, pourvue du/des compteur(s) de charge, est complètement chargée, partiellement, ou pas (appareil de cuisson vide). Cette estimation peut donc être obtenue à partir de variations de données de températures mesurées sur l'une (au moins) de ces plaques.

L'étape comprendra de préférence, avantageusement pendant un temps (T) prédéfini qui commence à partir de la détection du début de l'étape de cuisson B):

- une sous-étape de mesure de la température de la plaque de chauffe équipée (plaque supérieure 63 figure 7), - puis une sous-étape de détermination de cette surface (Z) en fonction:

   * a) du temps calculé pour atteindre une pente stabilisée sensiblement nulle (zone précitée 8 figures 1, 3) d'évolution de cette température mesurée,
   * ou b) d'une chute de cette température comparée à un seuil prédéterminé (valeur(s) en amplitude, en atteinte d'une température minimum et/ou en pente(s), [B, cf. ci dessous],

avec dans le cas a), l'existence d'une relation entre la surface et la quantité d'énergie à apporter pour compenser les pertes caloriques dues à la mise en place de l'aliment.

Le calcul de ce paramètre pourra être réalisé par un moyen de calcul tel qu'un microcontrôleur équipant l'appareil.

Avec une solution multi-capteurs, comme par exemple avec les deux capteurs de température 11a,11b, montrés figure 2 (même si l'on préférera placer un premier capteur centré d'un côté (tel 11a figure 3), et un second décentré), des comparaisons, de préférence de valeurs de pentes, calculées pour l'un et l'autre de ces capteurs, avec un seuil prédéterminé, stocké en mémoire 72 pourra permettre de définir les valeurs du paramètre (Z) à utiliser.

Avec la solution à deux capteurs de température 11a,11b montrés figure 2 et si le paramètre retenu est la pente, les seuils suivants pourront être considérés:

- si pente>-0,5°C/s pour les deux capteurs => surface Z peu/pas chargée => valeur Z1,
- si pente<-0,5°C/s pour l'un des capteurs, avec => surface Z moyennement chargée => valeur Z2,
- si pente<-0,5°C/s pour les deux capteurs => surface Z complètement chargée => valeur Z3.

En tant que capteur(s) de température on pourra choisir des sondes à coefficient de température négatif (CTN). Ils pourront être logés derrière la plaque de chauffe qui les recouvrira intérieurement.

Des moyens de calcul permettent ensuite de calculer le temps de cuisson (T) de l'aliment en fonction du degré de la température (X) de cuisson interne souhaité, ici sélectionnée, de l'aliment, de l'épaisseur (Y) de l'aliment, et/ou de la surface (Z) qu'il occupe.

Ce temps de cuisson (T) de l'aliment peut être déterminé par une méthode de calcul de corrélation quadratique avec la fonction du second degré suivante :

$$(1): T(X,Y,Z)=A1+A2*X+A3*Y+A4*Z+A5*X^2+A6*Y^2+A7*Z^2+A8*X*Y+A9*X*Z+A10*Y*Z.$$

Les coefficients A1, A2, A3, A4, A5, A6, A7, A8, A9 et A10 sont prédéfinis pour chaque menu, pour des conditions de températures prédéfinies. Ils sont stockés dans des moyens de stockage (tels la mémoire 72). Ce sont des constantes.

En variante, le temps de cuisson (T) de l'aliment peut être déterminé par une méthode de calcul de corrélation linéaire avec la fonction du premier degré suivante :

$$(2): T(X,Y,Z)=B1+B2*X+B3*Y+B4*Z$$

Les coefficients B1, B2, B3, et B4 sont prédéfinis pour chaque menu, pour des conditions de températures prédéfinies. Ils sont stockés dans lesdits moyens de stockage (mémoire 72 par exemple). Ce sont des constantes.

La méthode de corrélation linéaire est préférée à l'autre car, bien que moins précise, elle ne nécessite que quatre coefficients. Elle est ici plus performante.

Concernant l'estimation de la surface occupée par les aliments, on a décrit ci-avant la possibilité d'une estimation de la surface (Z) via (au moins) deux capteurs de température (valeurs Z1, Z2...).

Une autre possibilité consiste à n'utiliser qu'un seul capteur d'énergie (repéré 11 figure 7) qui peut être une sonde de température placée, comme précédemment, en contact avec l'une des plaques de chauffe. Favorablement, ce capteur sera déporté en(vers la) périphérie de la plaque de chauffe concernée, en face d'une zone de la plaque où on ne doit(ou peut) pas placer d'aliment. Le capteur pourra remplir deux fonctions, en relation avec le/les microcontrôleur(s) :

- réguler la température de la plaque,
- mesurer la quantité d'énergie à fournir pour compenser les pertes liées à la présence de l'/des aliment(s) sur la plaque. En supposant que les aliments sont des steaks (voir figures 4-6), il sera possible de corréler ceci avec le nombre de tels steaks présents en cuisson sur la plaque, ou l'importance de la surface occupée.

Ainsi :

- une pente au-delà d'un premier seuil retenu et stocké en mémoire 72 pourra correspondre à une plaque de chauffe complètement occupée par l'aliment,
- une pente en-deçà d'un second seuil pourra correspondre à une plaque de chauffe inoccupée,
- et une pente entre les deux seuils pourra correspondre à une plaque de chauffe partiellement occupée.

Pour illustrer cela, on voit figure 4 un exemple de cinétique de cuisson établi sur les base suivantes : cuisson de trois pavés/steaks découpés dans un rond de gite, épaisseur commune de 29 mm, surfaces identiques des plaques 61,63 sensiblement complètement occupées (sauf juste en périphérie où se trouve le capteur de température 11 ; figure 7), température à coeur attendue (en fin de cuisson) d'environ 60°C, temps de cuisson d'environ 23 mn (calculé).

Cette cinétique pourrait être considérée comme valable quelle que soit la méthode d'estimation de la surface utilisée ; elle pourrait donc remplacer l'illustration de la figure 1 où la courbe 2 concernait une application multi-capteurs.

Figure 4, l'axe des abscisses représente le temps en seconde, l'axe des ordonnées de gauche 4 représente la température (°C). L'axe des ordonnées de droite 50 représente l'épaisseur (mm) de l'aliment. La courbe 21 représente l'évolution de l'épaisseur de l'/des aliment(s) présent(s) sur la plaque de chauffe en fonction du temps. L'évolution de la courbe 2 est comparable à celle de la figure 1 (voir commentaires ci-avant). Après l'étape A (= A1 + A2) de préchauffage, l'enfournement de l'aliment dans l'appareil de chauffe correspond au début de l'étape B(= B1 + B2) de cuisson de cet aliment.

Il y apparaît :

- une cuisson en deux phases :

    * une phase B1 de marquage;
    * une phase B2 de cuisson à plus basse température, pour laisser le temps aux calories de migrer vers le coeur sans risquer de calciner la périphérie ;

- un temps de marquage approximativement proportionnel à la surface d'échange (Z) et donc à la quantité d'aliments.

Pendant toute la phase carré pointillé 22 où il y a marquage de l'(ou des) aliment (s), il n'y a pas d'inversion du cycle de délivrance de la puissance électrique (la puissance/l'énergie électrique délivrée aux résistances demeure maximum).

C'est de préférence l'intervalle pendant lequel la phase d'analyse (B1, carré pointillé 22, figure 4) est réalisée : valeurs Y et/ou Z, temps T calculé.

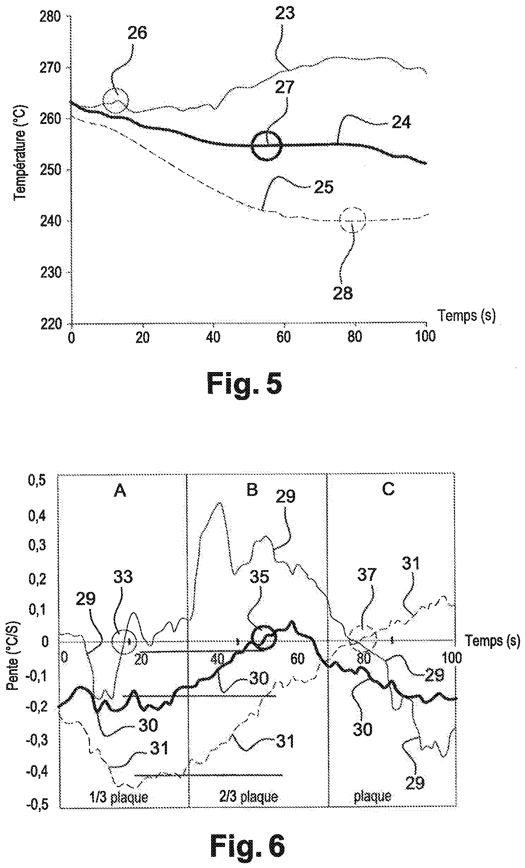

Concernant l'estimation de la surface (Z) occupée par les aliments, les figures 5, 6 montrent respectivement :

- l'évolution de la température détectée en fonction du temps et de ladite surface occupée,
- l'évolution de la pente de la courbe 2 en fonction du temps et de la surface occupée.

Figures 5,6 l'origine du temps (T = 0) est le moment de l'enfournement de l'aliment dans l'appareil de chauffe, soit ici (comme indiqué figures 1 et 4) le début de l'étape de cuisson de l'aliment (B).

Figure 5, les courbes 23,24,25 correspondent respectivement aux cas 1,2,3 steaks. Les cercles 26,27,28 montrent les annulations de pente respectives.

Figure 6, l'axe des ordonnées correspond à la pente (en °C/s), l'abscisse est le temps (en s).

Les courbes 29,30,31 correspondent respectivement aux cas 1,2,3 steaks. Les cercles 33,35,37 montrent les annulations de pente respectives (passage par l'abscisse des temps).

L'analyse de la pente concernée permet de mettre en évidence qu'il existe des corrélations entre :

- la surface d'échange et la pente minimum, ou la chute de température à un instant donné,
- la surface d'échange et l'instant où la pente s'annule (instant où les pertes liées aux échanges entre les aliments et la plaque ont été compensées).

La deuxième relation (figure 6) est jugée plus fiable car moins dépendante de la précision des calculs (cf. dispersion sur courbe avec un steak) et de la position du capteur sur la plaque.

On peut ensuite envisager deux méthodes pour estimer la surface occupée:

- établir via un plan d'expérience conduit en usine, avant la commercialisation de l'appareil, la fonction affine (y=ax+b) qui relie la surface occupée à l'instant où la pente s'inverse,
- identifier trois zones :

  * zone A, plaque faiblement chargée (1/3 de la plaque occupée),
  * zone B, plaque moyennement chargée (2/3 plaque),
  * zone C, plaque fortement chargée (3/3 plaque),

- puis tester la correspondance du système à l'une ou l'autre de ces trois zones.

Cette méthode est potentiellement plus facile à synchroniser avec la communication à l'utilisateur des informations correspondantes (indicateur 79).

Dans ce cas :

- il faut que le capteur 11 soit positionné sur une zone sans aliment, telle le pourtour de la plaque,
- on prend en compte, comme expliqué ci-avant :

  * l'existence d'une corrélation entre l'inversion de la pente d'évolution de la température détectée par ce capteur et la surface d'échange entre la plaque de chauffe concernée et l'aliment (les aliments) disposés contre cette plaque : passage par une pente d'évolution nulle ; voir ci-avant,
  * l'existence d'une corrélation entre la pente mini et ladite surface d'échange.

De ce qui précède, on aura compris que deux méthodes ont donc été pensées pour l'estimation de la surface occupée :

- une première pouvant n'utiliser qu'un seul capteur de température 11 déporté en périphérie de la plaque concernée, avec donc l'existence d'une relation entre la surface occupée par l'aliment interposé et la quantité d'énergie à apporter pour compenser les pertes (temps observé pour une pente de la courbe 2 égale à 0), ou une chute de température plus ou moins importante (seuil de température), ou une chute de température plus ou moins rapide (seuil de pente),
- une seconde utilisant plusieurs capteurs température, tels 11a,11b, répartis sur ou sous la plaque concernée, avec alors présence ou non d'aliment(s) aux environs de deux, trois, voire quatre capteurs.

A noter également que, si l'on dispose le(s) capteur(s) de température 11 ou 11a,11b de manière qu'il(s) détecte(nt) la température de la plaque de cuisson (ici supérieure) qui ne vient au contact de l'aliment que quand les deux plaques 61,63 se déplacent l'une par rapport à l'autre pour fermer l'appareil (moment où temps de cuisson =0), on pourra alors disposer de deux informations pour déclencher le début de la cuisson (phase B): celle issue du/des capteur(s) de température et celle du capteur d'épaisseur.

Figure 7, on notera encore que l'appareil 60 de cuisson du type gril viande comprend donc les plaques de chauffe inférieure 61 et supérieure 63, ainsi que ce qui suit :

- les moyens 65 de mesure de l'épaisseur (Y) d'un ou plusieurs aliment(s) (dénommé ici « l'aliment » 80), tel le ou les steak (s) précité (s) (ces moyens 65 sont liés fonctionnellement au moyen 66 de rapprochement/écartement relatif des plaques 61,63) ;
- les moyens 67 de sélection pour sélectionner, parmi plusieurs pré-enregistrements, le degré/la température (X) de cuisson interne souhaitée de l'aliment ;
- des moyens 69 d'estimation de la surface (Z) occupée par l'aliment sur l'une des plaques de chauffe ; et
- des moyens 71 de calcul du temps de cuisson (T) de l'aliment.

Une chambre 600 de cuisson pour l'aliment (figure 7) est définie entre les plaques de chauffe inférieure 61 et supérieure 63.

Les moyens 69 d'estimation de la surface (Z) comprennent le capteur de température 11 ou les capteurs 11a, 11b précités.

Pour mener à bien au mieux l'estimation de la surface (Z) occupée par l'aliment 80, on recommande en outre que les moyens 71 de calcul du temps de cuisson (T) de l'aliment comprennent le microcontrôleur 73 configuré pour déterminer la pente de la courbe de température obtenue à partir des mesures précitées de température.

Et, dans le même but, on conseille par ailleurs qu'avec ces mesures de température, ce microcontrôleur, ou un autre 75 :

- régule la température de la plaque de chauffe 61 ou 63, et
- fasse évoluer la quantité d'énergie à fournir, par la ou les résistance (s) 10, en fonction de l'importance de la surface occupée par lesdits aliments sur la plaque de chauffe considérée, afin donc de compenser les chutes de température liées au placement de ces aliments entre les plaques.

Les microcontrôleurs 73,75 peuvent être réunis dans un microcontrôleur central 77. Le(s) microcontrôleur(s) est/sont relié(s) aux moyens précités 65,66,67,69/11(ou 11a,11b),70,71,72,79 et aux résistances 10, pour leur pilotage. Concernant la prise en compte du degré (X) interne de cuisson à atteindre de l'aliment, on a déjà compris qu'on peut se passer de l'étape précitée de sélection par l'utilisateur de l'une desdites températures mises en mémoire à cette fin.

Le second synoptique ci-dessous détaille ce cas (Il est rappelé que les étapes précitées de mise en mémoire 72, en usine, de données, algorithmes... comme précité sont réalisées de façon identique dans ce cas).

Ainsi, lorsque l'utilisateur décide d'utiliser l'appareil qu'il vient d'acheter, il lui suffit d'enclencher ce dernier qui se place en mode préchauffage, de la manière déjà expliquée.

Se déroule alors ce qui suit :

- alors que l'appareil fonctionne et pour atteindre une cuisson interne plus ou moins importante de l'aliment alors souhaitée par un utilisateur, l'utilisateur met l'aliment en contact avec la ou les plaque(s) de chauffe, telle 61,63,
- l'appareil calcule alors un premier temps de cuisson (T) de l'aliment ainsi disposé, en fonction de la température (X) la plus basse parmi celles mises en mémoire,
- à l'issue de ce premier temps de cuisson (T) calculé, l'appareil indique à l'utilisateur l'atteinte de la cuisson correspondante (via par exemple l'indicateur 79), puis :
- si l'utilisateur ne retire pas l'aliment, l'appareil applique automatiquement un second temps calculé de cuisson (T) de l'aliment, en fonction de la seconde dans l'ordre croissant des dites températures mises en mémoire (X) ; on comprend bien que ce deuxième temps de cuisson va permettre d'accroître la cuisson de l'aliment qui sera ainsi davantage cuit,

- à l'issue de ce second temps de cuisson (T) calculé, l'appareil indique à nouveau à l'utilisateur l'atteinte de la cuisson correspondante,
- et ainsi de suite.

Comme déjà expliqué, l'appareil va, en cours de fonctionnement :

- mesurer l'épaisseur (Y) de l'aliment alors disposé contre ladite plaque de chauffe et/ou estimer la surface (Z) occupée par cet aliment sur cette plaque de chauffe,
- calculer le temps de cuisson (T) de l'aliment ainsi disposé, en fonction :

* outre de ladite température (X) de cuisson interne parmi celles mises en mémoire,
* de l'épaisseur (Y) de l'aliment et/ou de la surface (Z) occupée par l'aliment.

Pour le reste, les explications ont déjà été fournies ; elles demeurant valables.

A noter par contre, qu'il est ici considéré qu'un appareil de cuisson chauffé électriquement, par résistances répondrait à la problématique déjà évoquée, dès lors qu'il comprendrait :

- outre au moins un plaque de chauffe où disposer l'aliment à cuire, et en liaison avec un microcontrôleur (tel 73,75,77) prévu dans l'appareil,
- des moyens d'estimation d'une surface (Z) occupée par l'aliment sur la plaque de chauffe, via au moins un capteur de température (tel 11,11a,11a) qui:

* régule la température de la plaque de chauffe dont il mesure la température, et
* fait évoluer la quantité d'énergie électrique à fournir, en fonction de l'importance de la surface occupée par l'aliment sur la plaque de chauffe, afin de compenser les chutes de température liées au placement de l'aliment, ou des aliments, sur l'une des plaques de chauffe, ou entre ces plaques de chauffe.

Les moyens d'estimation d'une surface (Z) pourront être ceux de la description des pages précédentes.

Concernant l'appareil concerné par le présent sujet, il pourrait aussi s'agir d'un appareil ne comprenant qu'une seule plaque de chauffe pour la cuisson par contact de l'aliment.

Une poêle ou tout ustensile de cuisine à calotte recevant à son contact un aliment à cuire (casserole, faitout..) devrait pouvoir convenir, dès lors qu'il serait relié à une source de chaleur pilotable, comme on l'a compris de ce qui précède.

Notamment dans ce cas, on pourrait prévoir que le moyen de mesure de l'épaisseur (Y) de l'aliment placé en contact avec la plaque de chauffe soit un couvercle disposable de façon mobile sur l'ustensile et pourvu du capteur adapté déjà évoqué. Le couvercle pourrait être annulaire.

Pour favoriser le contact aliment/plaque(s) de chauffe, chaque plaque sera, en toute hypothèse de préférence pleine. Une solution grille ne serait alors pas adaptée.

Dans ce qui précède, en référence aux solutions illustrées, on a prévu que la ou chaque valeur (utile) de température (X) de cuisson interne de l'aliment soit préenregistrée en mémoire de l'appareil, en usine, avant la première utilisation opérationnelle de cet appareil. On pourrait toutefois prévoir que cette(ces) donnée(s) soi(en)t entrée(s) en mémoire 72 par l'utilisateur, par exemple via l'interface 67. Ainsi, on peut prévoir que l'utilisateur entre en mémoire 72 une valeur de température (X) de cuisson de 45°C, pour une viande souhaitée saignante. Dans ce cas, il pourrait n'y avoir, en usine (donc avant commercialisation de l'appareil), aucune mise en mémoire notamment de la/des différente(s) température(s) (X) de cuisson internes de l'aliment.

On notera par ailleurs, qu'utilisé seul, indépendamment de la combinaison des autres caractéristiques précitées, le procédé suivant répond aussi à la problématique évoquée ci-avant.

Procédé de mise en oeuvre d'un appareil de cuisson d'un aliment, chauffé électriquement et comprenant au moins une plaque de chauffe contre laquelle est disposé l'aliment (pour une cuisson par contact), ledit procédé comprenant au moins une étape d'estimation de la surface (Z) occupée par l'aliment sur ladite plaque de chauffe, cette étape comprenant une sous-étape de mesure de la température de ladite plaque de chauffe par au moins un capteur de température, et une sous-étape de détermination de la pente de la courbe de température obtenue à partir de mesures d'au moins un capteur de température, ladite pente permettant de déterminer si ladite surface de la plaque de chauffe est occupée par l'aliment.

On conseille que les mesures de températures sur ladite plaque de chauffe soient conduites par le ou les capteur(s) 11/11a,11b précité(s) disposé(s) comme indiqué.

Même remarque que ci-dessus concernant l'utilisation intéressante seule, indépendamment de la combinaison des autres caractéristiques précitées, de l'un ou l'autre des procédés suivants, qui répondent aussi à la problématique évoquée ci-avant :

- procédé de mise en oeuvre d'un appareil de cuisson chauffé électriquement et comprenant au moins une plaque de chauffe où disposer un aliment (pour une cuisson par contact), ledit procédé comprenant une étape de préchauffage A) de l'appareil suivi d'une étape de cuisson de l'aliment B), le début de l'étape de cuisson B) étant détecté par un abaissement au-delà d'un seuil prédéterminé de la température de la plaque de chauffe,
- procédé de mise en oeuvre d'un appareil de cuisson chauffé électriquement et comprenant au moins une plaque de chauffe où disposer l'aliment (pour une cuisson par contact), ledit procédé comprenant une étape de calcule par l'appareil du temps de cuisson de l'aliment en fonction d'au moins une valeur de température (X) de cuisson interne de l'aliment préenregistrée en mémoire de l'appareil avant sa première utilisation opérationnelle.

**Revendications**

1.  Procédé de mise en oeuvre d'un appareil (1) de cuisson d'un aliment, tel qu'un gril viande, comprenant au moins une plaque de chauffe (61, 63) pour chauffer à son contact l'aliment, le procédé comprenant

    - une mise en mémoire (72) de l'appareil (1) de différentes températures (X) de cuisson internes de l'aliment,
    - pour atteindre une cuisson interne plus ou moins importante de l'aliment, alors souhaitée par un utilisateur, une sélection par l'utilisateur de l'une desdites températures (X) et une mise en contact de l'aliment avec la ou les plaques de chauffe (61, 63),et
    - une mesure de l'épaisseur (Y) de l'aliment alors disposé contre ladite plaque de chauffe (61, 63) et/ou une estimation de la surface (Z) occupée par cet aliment sur la plaque de chauffe (61, 63),

    le procédé étant **caractérisé en ce qu'**il comprend

    - un calcul du temps de cuisson de l'aliment en fonction de la température (X) sélectionnée et en fonction de l'épaisseur (Y) de l'aliment, et/ou de la surface (Z) occupée par l'aliment.

2.  Procédé de mise en oeuvre d'un appareil (1) de cuisson d'un aliment, comprenant au moins une plaque de chauffe (61, 63) pour chauffer à son contact l'aliment, le procédé comprenant :

    - une mise en mémoire (72) de l'appareil de différentes températures (X) de cuisson internes de l'aliment,
    - pour atteindre une cuisson interne plus ou moins importante de l'aliment alors souhaitée par un utilisateur, une mise en contact de l'aliment avec la ou les plaques de chauffe (61, 63),
    - une mesure de l'épaisseur (Y) de l'aliment alors disposé contre ladite plaque de chauffe (61, 63) et/ou une estimation de la surface (Z) occupée par cet aliment sur la plaque de chauffe (61, 63),
    le procédé étant **caractérisé en ce qu'**il comprend - un calcul d'un premier temps de cuisson (T) de l'aliment ainsi disposé, en fonction de la température (X) la plus basse parmi celles mises en mémoire (72) et en fonction de l'épaisseur (Y) de l'aliment, et/ou de la surface (Z) occupée par l'aliment,
    - à l'issue dudit premier temps de cuisson (T) calculé, une indication à l'utilisateur, par l'appareil (1), de l'atteinte de la cuisson correspondante, puis :
    - si l'utilisateur ne retire pas l'aliment, l'application par l'appareil (1) d'un second temps calculé de cuisson (T) de l'aliment accroissant la cuisson de l'aliment, en fonction de la seconde température de cuisson interne dans l'ordre croissant des dites températures mises en mémoire (X),
    - à l'issue de ce second temps de cuisson (T) calculé, à nouveau une indication à l'utilisateur, par l'appareil (1), de l'atteinte de la cuisson correspondante,
    - et ainsi de suite.

3.  Procédé selon la revendication 1 ou la revendication 2, **caractérisé en ce que** la ou chaque valeur de température (X) de cuisson interne de l'aliment mise en mémoire (72) de l'appareil (1) est préenregistrée en usine, avant la première utilisation opérationnelle de l'appareil (1).

4.  Procédé selon l'une des revendications 1 à 3, **caractérisé en ce que**, lors dudit fonctionnement de l'appareil (1), on dispose l'aliment entre plusieurs dites plaques de chauffe (61, 63), à leurs contacts.

5.  Procédé selon l'une des revendications 1 à 4, **caractérisé en ce que** le calcul du temps de cuisson (T) de l'aliment est fonction de ladite surface (Z) occupée par l'aliment, laquelle est obtenue par des mesures de températures de plaque de chauffe (61, 63).

**6.** Procédé selon la revendication 5, **caractérisé en ce que**, pour estimer la surface (Z) occupée par l'aliment, on mesure, par au moins un capteur de température (11) et consécutivement à la mise en contact de l'aliment avec la ou les plaque (s) de chauffe (61 ,63), la température de la ou de l'une des plaque(s) de chauffe (61, 63), et on compare la variation de la température mesurée qui en découle à au moins un seuil de référence.

**7.** Procédé selon l'une des revendications 1 à 6, **caractérisé en ce que** le temps de cuisson (T) de l'aliment est obtenu par une méthode de calcul par corrélation quadratique ou linéaire.

**8.** Procédé selon l'une des revendications 1 à 7, **caractérisé en ce qu'**il comprend, avant la mise en contact de l'aliment avec la ou les plaque (s) (61, 63), une étape (A) de préchauffage de l'appareil (1) suivie de l'étape de cuisson (B) de l'aliment dont le début est détecté par un abaissement au-delà d'un seuil prédéterminé de la température de la ou de l'une des plaques de chauffe (61, 63).

**9.** Procédé selon l'une des revendications 1 à 8, **caractérisé en ce que** le calcul du temps de cuisson (T) de l'aliment est fonction de ladite surface (Z) occupée par l'aliment et, pour estimer cette surface, on utilise un seul capteur de température (11) qui, consécutivement à la mise en contact de l'aliment avec la ou les plaque(s) (61, 63), mesure la température de l'une au moins desdites plaques, à l'écart de la zone (8) de contact de l'aliment, et on compare à au moins un seuil les variations de températures mesurées qui en découlent ou un temps alors calculé jusqu'à une stabilisation de la température mesurée, après ladite mise en contact.

**10.** Procédé selon l'une des revendications 1 à 8, **caractérisé en ce que** le calcul du temps de cuisson (T) de l'aliment est fonction de ladite surface (Z) occupée par l'aliment et, pour estimer cette surface, on utilise plusieurs capteurs de température (11a, 11b) qui, consécutivement à la mise en contact de l'aliment avec la ou les plaque (s) (61, 63), mesurent la température de l'une au moins desdites plaques, dans la zone (8) de contact de l'aliment, et on compare à au moins un seuil les variations de températures mesurées qui en découlent ou un temps alors calculé jusqu'à une stabilisation de la température mesurée, après ladite mise en contact.

**11.** Procédé selon l'une des revendications 1 à 10, **caractérisé en ce que** pendant la ou les étapes d'estimation de la surface (Z) occupée par l'aliment et/ou de l'épaisseur (Y) de l'aliment, et/ou du calcul du temps de cuisson (T) de l'aliment, il y a marquage de l'aliment, avec une puissance électrique délivrée par l'appareil (1) qui est maximum.

**12.** Procédé selon l'une des revendications 1 à 11, **caractérisé en ce qu'**il comprend l'une au moins des étapes suivantes :

   - sélection de la catégorie de l'aliment à cuire, et/ou
   - sélection de l'état de congélation de l'aliment, et/ou
   - sélection d'un marquage de gril souhaité de l'aliment.

**13.** Procédé selon la revendication 12, **caractérisé en ce que** la température de cuisson ($\theta$) de l'aliment et la température ($\theta'$) de préchauffage sont fonction de ladite sélection opérée.

**14.** Procédé selon l'une des revendications 1 à 13, **caractérisé en ce qu'**après avoir disposé l'aliment au contact de la ou des plaque(s) (61, 63), on mesure l'épaisseur (Y) de l'aliment et, en fonction de cette mesure, on déclenche ou non la cuisson de l'aliment par le calcul du temps de cuisson.

**15.** Appareil de cuisson pour la mise en oeuvre du procédé selon l'une des revendications 1 à 14, l'appareil comprenant au moins une plaque de chauffe (61, 63) pour chauffer à son contact l'aliment, l'appareil comprenant , pour atteindre une cuisson interne plus ou moins importante de l'aliment souhaitée par un utilisateur :

   - une mémoire (72) pour stocker différentes températures (X) de cuisson internes de l'aliment,

   des moyens (65) de mesure de l'épaisseur (Y) de l'aliment alors disposé au contact de la ou des plaque(s) de chauffe (61, 63) et/ou des moyens (69) d'estimation de la surface (Z) occupée par cet aliment sur la ou l'une des plaques de chauffe (61, 63),

   - des moyens (79) d'indication à l'utilisateur, par l'appareil (1), de l'atteinte de la cuisson correspondante,

**caractérisé en ce que** l'appareil comprend en outre

- des moyens (71) de calcul d'au moins un temps de cuisson (T) de l'aliment ainsi disposé, en fonction :

    * de l'une au moins des températures (X) de cuisson internes parmi celles mises en mémoire (72),
    * de l'épaisseur (Y) de l'aliment, et/ou de la surface (Z) occupée par l'aliment.

**Patentansprüche**

1. Verfahren für den Einsatz eines Gerätes (1) zum Garen eines Nahrungsmittels, wie eines Fleischgrills, zumindest eine Wärmeplatte (61, 63) zum Erwärmen des Nahrungsmittels bei seinem Kontakt umfassend, wobei das Verfahren umfasst

    - Speichern (72) im Gerät (1) verschiedener Kerngartemperaturen (X) für das Nahrungsmittel,
    - zum Erreichen einer mehr oder weniger starken Garung im Kern des Nahrungsmittels, die von einem Benutzer gewünscht wird, eine Auswahl durch den Benutzer der einen der besagten Temperaturen (X) und ein Inkontaktbringen des Nahrungsmittels mit der oder den Wärmeplatten (61, 63), und
    - eine Messung der Dicke (Y) des Nahrungsmittels, das an der besagten Wärmeplatte (61, 63) angelegt ist, und/oder eine Schätzung der Oberfläche (Z), die von diesem Nahrungsmittel auf der Wärmeplatte (61, 63) eingenommen wird,

    wobei das Verfahren **dadurch gekennzeichnet ist, dass** es umfasst

    - eine Berechnung der Garzeit für das Nahrungsmittel in Abhängigkeit von der ausgewählten Temperatur (X) und in Abhängigkeit von der Dicke (Y) des Nahrungsmittels, und/oder der Oberfläche (Z), die von dem Nahrungsmittel eingenommen wird.

2. Verfahren für den Einsatz eines Gerätes (1) zum Garen eines Nahrungsmittels, zumindest eine Wärmeplatte (61, 63) zum Erwärmen des Nahrungsmittels im Kontakt zu ihr umfassend, wobei das Verfahren umfasst:

    - Speichern (72) im Gerät verschiedener Kerngartemperaturen (X) für das Nahrungsmittel,
    - zum Erreichen einer mehr oder weniger starken Garung im Kern des Nahrungsmittels, die von einem Benutzer gewünscht wird, ein Inkontaktbringen des Nahrungsmittels mit der oder den Wärmeplatten (61, 63),
    - eine Messung der Dicke (Y) des Nahrungsmittels, das an der besagten Wärmeplatte (61, 63) angelegt ist, und/oder eine Schätzung der Oberfläche (Z), die von diesem Nahrungsmittel auf der Wärmeplatte (61, 63) eingenommen wird,

    wobei das Verfahren **dadurch gekennzeichnet ist, dass** es umfasst

    - eine Berechnung einer ersten Garzeit (T) für das so angeordnete Nahrungsmittel in Abhängigkeit von der niedrigsten Temperatur (X) unter jenen, die gespeichert (72) wurden, und in Abhängigkeit von der Dicke (Y) des Nahrungsmittels, und/oder der Oberfläche (Z), die von dem Nahrungsmittel eingenommen wird,
    - am Ende der besagten berechneten ersten Garzeit (T) einen Hinweis für den Benutzer durch das Gerät (1) auf das Erreichen der entsprechenden Garung, danach:
    - falls der Benutzer das Nahrungsmittel nicht entfernt, die Anwendung durch das Gerät (1) einer zweiten berechneten Garzeit (T) für das Nahrungsmittel, welche die Garung des Nahrungsmittels in Abhängigkeit von der zweiten Gartemperatur im Kern, in ansteigender Reihenfolge der besagten gespeicherten Temperaturen (X), steigert,
    - am Ende dieser berechneten zweiten Garzeit (T) erneut einen Hinweis für den Benutzer durch das Gerät (1) auf das Erreichen der entsprechenden Garung,
    - und so weiter.

3. Verfahren nach Anspruch 1 oder nach Anspruch 2, **dadurch gekennzeichnet, dass** der oder jeder Temperaturwert (X) zum Garen im Kern des Nahrungsmittels, der im Gerät (1) gespeichert (72) ist, vor der ersten betrieblichen Nutzung des Gerätes (1) im Werk vorregistriert wird.

4. Verfahren nach einem der Ansprüche 1 bis 3, **dadurch gekennzeichnet, dass** man beim besagten Betrieb des Gerätes (1) das Nahrungsmittel zwischen mehreren besagten Wärmeplatten (61, 63) im Kontakt zu ihnen anordnet.

5. Verfahren nach einem der Ansprüche 1 bis 4, **dadurch gekennzeichnet, dass** die Berechnung der Garzeit (T) für das Nahrungsmittel von der besagten Oberfläche (Z) abhängt, die vom Nahrungsmittel eingenommen wird, welche man durch Messungen von Temperaturen von Wärmeplatten (61, 63) erhält.

6. Verfahren nach Anspruch 5, **dadurch gekennzeichnet, dass** man zum Schätzen der Oberfläche (Z), die vom Nahrungsmittel eingenommen wird, durch zumindest einen Temperatursensor (11) und im Anschluss an das Inkontaktbringen des Nahrungsmittels mit der oder den Wärmeplatte (n) (61, 63), die Temperatur der oder einer der Wärmeplatte(n) (61, 63) misst, und die Variation der gemessenen Temperatur, die sich daraus ergibt, mit zumindest einem Referenzgrenzwert vergleicht.

7. Verfahren nach einem der Ansprüche 1 bis 6, **dadurch gekennzeichnet, dass** man die Garzeit (T) für das Nahrungsmittel durch ein Berechnungsverfahren durch quadratische oder lineare Korrelation erhält.

8. Verfahren nach einem der Ansprüche 1 bis 7, **dadurch gekennzeichnet, dass** es vor dem Inkontaktbringen des Nahrungsmittels mit der oder den Wärmeplatte(n) (61, 63) einen Schritt (A) zum Vorheizen des Gerätes (1), gefolgt vom Garschritt (B) des Nahrungsmittels umfasst, dessen Beginn durch ein Absenken über einen vorbestimmten Grenzwert hinaus der Temperatur der oder einer der Wärmeplatte(n) (61, 63) erfasst wird.

9. Verfahren nach einem der Ansprüche 1 bis 8, **dadurch gekennzeichnet, dass** die Berechnung der Garzeit (T) für das Nahrungsmittel von der besagten Oberfläche (Z) abhängt, die vom Nahrungsmittel eingenommen wird, und man zum Schätzen dieser Oberfläche einen einzigen Temperatursensor (11) verwendet, der im Anschluss an das Inkontaktbringen des Nahrungsmittels mit der oder den Wärmeplatte(n) (61, 63) die Temperatur der zumindest einen der besagten Platten abseits der Zone (8) im Kontakt mit dem Nahrungsmittel misst, und man mit zumindest einem Grenzwert die gemessenen Temperaturvariationen, die daraus hervorgehen, oder eine berechnete Zeit bis zu einer Stabilisierung der gemessenen Temperatur nach dem Inkontaktbringen vergleicht.

10. Verfahren nach einem der Ansprüche 1 bis 8, **dadurch gekennzeichnet, dass** die Berechnung der Garzeit (T) für das Nahrungsmittel von der besagten Oberfläche (Z) abhängt, die vom Nahrungsmittel eingenommen wird, und man zum Schätzen dieser Oberfläche mehrere Temperatursensoren (11a, 11b) verwendet, die im Anschluss an das Inkontaktbringen des Nahrungsmittels mit der oder den Wärmeplatte(n) (61, 63) die Temperatur der zumindest einen der besagten Platten in der Zone (8) im Kontakt mit dem Nahrungsmittel messen, und man mit zumindest einem Grenzwert die gemessenen Temperaturvariationen, die daraus hervorgehen, oder eine berechnete Zeit bis zu einer Stabilisierung der gemessenen Temperatur nach dem Inkontaktbringen vergleicht.

11. Verfahren nach einem der Ansprüche 1 bis 10, **dadurch gekennzeichnet, dass** es während des oder der Schritte zum Schätzen der Oberfläche (Z), die vom Nahrungsmittel eingenommen wird, und/oder der Dicke (Y) des Nahrungsmittels, und/oder der Berechnung der Garzeit (T) für das Nahrungsmittel eine Markierung des Nahrungsmittels mit einer vom Gerät (1) abgegebenen elektrischen Leistung gibt, die maximal ist.

12. Verfahren nach einem der Ansprüche 1 bis 11, **dadurch gekennzeichnet, dass** es zumindest einen der folgenden Schritte umfasst:

   - Auswahl der Kategorie des zu garenden Nahrungsmittels, und/oder
   - Auswahl des Gefrierzustandes des Nahrungsmittels, und/oder
   - Auswahl einer gewünschten Grillmarkierung des Nahrungsmittels.

13. Verfahren nach Anspruch 12, **dadurch gekennzeichnet, dass** die Gartemperatur (θ) für das Nahrungsmittel und die Vorheiztemperatur (θ') von der besagten getroffenen Auswahl abhängen.

14. Verfahren nach einem der Ansprüche 1 bis 13, **dadurch gekennzeichnet, dass**, nachdem das Nahrungsmittel in Kontakt mit der oder den Wärmeplatte (n) (61, 63) angeordnet worden ist, man die Dicke (Y) des Nahrungsmittels misst, und man in Abhängigkeit von dieser Messung die Garung des Nahrungsmittels durch die Berechnung der Garzeit auslöst oder nicht.

15. Gerät zum Garen zum Umsetzen des Verfahrens nach einem der Ansprüche 1 bis 14, wobei das Gerät zumindest eine Wärmeplatte (61, 63) zum Erwärmen des Nahrungsmittels im Kontakt zu ihr umfasst, wobei das Gerät zum Erreichen einer mehr oder weniger starken Garung im Kern des Nahrungsmittels, die vom Benutzer gewünscht wird, umfasst:

- einen Speicher (72) zum Ablegen verschiedener Temperaturen (X) zum Garen im Kern des Nahrungsmittels, Mittel (65) zum Messen der Dicke (Y) des Nahrungsmittels in Kontakt mit dem oder den Wärmeplatte(n) (61, 63) und/oder Mittel (69) zum Schätzen der Oberfläche (Z), die von diesem Nahrungsmittel auf der oder einer der Wärmeplatte(n) (61, 63) eingenommen wird,
- Mittel (79) zum Hinweisen des Benutzers durch das Gerät (1) auf das Erreichen der entsprechenden Garung, **dadurch gekennzeichnet, dass** das Gerät darüber hinaus umfasst
- Mittel (71) zum Berechnen zumindest einer Garzeit (T) für das so angeordnete Nahrungsmittel, in Abhängigkeit:

-- von zumindest einer der Temperaturen (X) zum Garen im Kern aus jenen, die abgespeichert (72) worden sind,
-- von der Dicke (Y) des Nahrungsmittels, und/oder der Oberfläche (Z), die von dem Nahrungsmittel eingenommen wird.


## Claims

1. Method for using a food cooking appliance (1), such as a meat grill, comprising at least one heating plate (61, 63) for heating the food in contact therewith, the method comprising

   - memorisation (72) by the appliance (1) of different internal cooking temperatures (X) of the food,
   - in order to attain a greater or lesser degree of cooking of the food, sought by a user, selection by the user of one of said temperatures (X) and placing the food in contact with the heating plate(s) (61, 63), and
   - measurement of the thickness (Y) of the food arranged against said heating plate (61, 63) and/or estimation of the surface area (Z) occupied by this food on the heating plate (61, 63),

   the method being **characterised in that** it comprises

   - a calculation of the cooking time of the food according to the temperature (X) selected and according to the thickness (Y) of the food, and/or of the surface area (Z) occupied by the food.

2. Method for using a food cooking appliance (1), comprising at least one heating plate (61, 63) for heating the food in contact therewith, the method comprising:

   - memorisation (72) by the appliance (1) of different internal cooking temperatures (X) of the food,
   - in order to attain a greater or lesser degree of cooking of the food, sought by a user, placing the food in contact with the heating plate(s) (61, 63),
   - measurement of the thickness (Y) of the food arranged against said heating plate (61, 63) and/or estimation of the surface area (Z) occupied by this food on the heating plate (61, 63),

   the method being **characterised in that** it comprises - a calculation of a first cooking time (T) of the food arranged in this way, according to the lowest temperature (X) of those memorised (72) and according to the thickness (Y) of the food, and/or of the surface area (Z) occupied by the food,

   - following said first calculated cooking time (T), indication to the user, by the appliance (1), that the corresponding cooking has been attained, then:
   - if the user does not remove the food, application by the appliance (1) of a second calculated cooking time (T) of the food increasing the cooking of the food, according to the second internal cooking temperature in the increasing order of said memorised temperatures (X),
   - following this second calculated cooking time (T), a further indication to the user, by the appliance, that the corresponding cooking has been attained,
   - and so on.

3. Method according to claim 1 or claim 2, **characterised in that** the or each internal cooking temperature value (X) of the food memorised (72) by the appliance (1) is pre-recorded in the factory, before the first operational use of the appliance (1).

4. Method according to one of claims 1 to 3, **characterised in that**, during said operation of the appliance (1), the food is arranged between a plurality of said heating plates (61, 63), in contact therewith.

5. Method according to one of claims 1 to 4, **characterised in that** the calculation of the cooking time (T) of the food is dependent on said surface area (Z) occupied by the food, which is obtained by heating plate (61, 63) temperature measurements.

6. Method according to claim 5, **characterised in that**, in order to estimate the surface area (Z) occupied by the food, using at least one temperature sensor (11) and following the placing of the food in contact with the heating plate (s) (61, 63), the temperature of the or of one of the heating plate (s) (61, 63) is measured, and the resulting variation of the temperature measured is compared to at least one reference threshold.

7. Method according to one of claims 1 to 6, **characterised in that** the cooking time (T) of the food is obtained using a quadratic or linear correlation calculation method.

8. Method according to one of claims 1 to 7, **characterised in that** it comprises, before the food is placed in contact with the plate(s) (61, 63), a step (A) for pre-heating the appliance (1) followed by the food cooking step (B), the start of which is detected by a lowering beyond a predetermined threshold of the temperature of the or of one of the heating plates (61, 63).

9. Method according to one of claims 1 to 8, **characterised in that** the calculation of the cooking time (T) of the food is dependent on said surface area (Z) occupied by the food and, in order to estimate this surface area, a single temperature sensor (11) is used, which, following the placing of the food in contact with the plate (s) (61, 63), measures the temperature of one at least of said plates, away from the contact zone (8) of the food, and the resulting temperature variations measured or a time calculated until a stabilisation of the temperature measured, after said contacting, is compared to at least one threshold.

10. Method according to one of claims 1 to 8, **characterised in** the calculation of the cooking time (T) of the food is dependent on said surface area (Z) occupied by the food and, in order to estimate this surface area, a plurality of temperature sensors (11a, 11b) are used, which, following the placing of the food in contact with the plate(s) (61, 63), measure the temperature of one at least of said plates, in the contact zone (8) of the food, and the resulting temperature variations measured or a time calculated until a stabilisation of the temperature measured, after said contacting, is compared to at least one threshold.

11. Method according to one of claims 1 to 10, **characterised in that**, during the step(s) for estimating the surface area (Z) occupied by the food and/or the thickness (Y) of the food, and/or for calculating the cooking time (T) of the food, marking of the food occurs, with an electrical power supplied by the appliance (1) which is maximum.

12. Method according to one of claims 1 to 11, **characterised in that** it comprises one at least of the following steps:

   - selection of the category of the food to be cooked, and/or
   - selection of the frozen state of the food, and/or
   - selection of a sought grill marking of the food.

13. Method according to claim 12, **characterised in that** the cooking temperature ($\theta$) of the food and the pre-heating temperature ($\theta'$) are dependent on said selection made.

14. Method according to one of claims 1 to 13, **characterised in that**, after placing the food in contact with the plate (s) (61, 63), the thickness (Y) of the food is measured and, according to this measurement, the cooking of the food is optionally triggered by calculating the cooking time.

15. Cooking appliance for implementing the method according to one of claims 1 to 14, the appliance comprising at least one heating plate (61, 63) for heating the food in contact therewith, the appliance comprising, in order to attain a greater or lesser degree of cooking of the food, sought by a user:

   - a memory (72) for storing different internal cooking temperatures (X) of the food,

means (65) for measuring the thickness (Y) of the food placed in contact with the heating plate(s) (61, 63) and/or means (69) for estimating the surface area (Z) occupied by this food on the or one of the heating plates (61, 63),

- means (79) for indicating to the user, by the appliance (1), that the corresponding cooking has been attained,

**characterised in that** the appliance further comprises

- means (71) for calculating at least one cooking time (T) of the food arranged in this way, according to:

-- one at least of the internal cooking temperatures (X) of those memorised (72),
-- the thickness (Y) of the food, and/or surface area (Z) occupied by the food.

Fig. 1

**Fig. 2**

**Fig. 3**

**Fig. 4**

**Fig. 5**

**Fig. 6**

**Fig. 7**

**Fig. 8**

## RÉFÉRENCES CITÉES DANS LA DESCRIPTION

**Documents brevets cités dans la description**

- DE 4302190
- WO 2007149063 A
- WO 2007127072 A